# EUROPEAN PATENT APPLICATION

(11) **EP 3 119 017 A1**
(43) Date of publication of application: **18.01.2017**
(21) Application number: 14885771.7
(22) Date of filing: 25.08.2014
(51) Int. Cl.: H04B 10/29

(54) **OPTICAL COMB BASED ROADM UPLINK/DOWNLINK TRANSCEIVING SYSTEM, METHOD AND TERMINAL**

(30) Priority: 10.03.2014 CN 201410084576
(71) Applicant: ZTE Corporation, Shenzhen, Guangdong 518057 (CN)
(72) Inventor: LI, Juhao, Shenzhen Guangdong 518057 (CN); NIU, Luoping, Shenzhen Guangdong 518057 (CN); HE, Yongqi, Shenzhen Guangdong 518057 (CN); ZHOU, Weiqin, Shenzhen Guangdong 518057 (CN); SHEN, Bailin, Shenzhen Guangdong 518057 (CN)
(74) Representative: Awapatent AB
(86) International application number: PCT/CN2014/085130
(87) International publication number: WO 2015/135296

(57) **Abstract**

The embodiments of the present application disclose an optical comb based ROADM Add/Drop transceiving system, terminal and method, wherein the method includes: passing signals generated by an Add laser through an Add carrier apparatus to produce desired Add carrier signals; after selecting M channels of Add carrier signals according to Add management and control signaling, performing IQ modulation and carrier channel combination respectively, and transmitting the combined signal to a switching node and monitoring module; after the switching node and monitoring module outputs the combined signal, performing power splitting and transmitting signals to a coherent receiver; passing signals generated by a Drop laser through a Drop local oscillator apparatus to produce local oscillator signals, selecting N channels of local oscillator signals according to Drop management and control signaling, and transmitting the local oscillator signals to the coherent receiver; and after receiving the power split signals and the local oscillator signals, the coherent receiver performing demodulation, wherein M and N are numbers of channels of signals of an Add transmitting terminal and a Drop receiving terminal.

## Description

### Technical Field

The present invention relates to the field of optical fiber communications, and in particular, to an optical comb based Reconfigurable Optical Add/Drop Multiplexers (ROADM) Add/Drop transceiving system, terminal and method.

### Background of the Related Art

### (1) Bandwidth-variable optical network

With high-speed development of the internet, the data traffic in the network increases rapidly. On the other hand, the requirements of the new type of internet applications for the bandwidth have unpredictability. The two factors drive the optical network to develop towards a flexible, dynamic and high efficient direction. Under this background, in recent years, a concept of a bandwidth-variable optical network has been proposed in the industry. It overcomes the limitations of coarse granularity and fixed grid of the conventional Wavelength-Division Multiplexing (WDM) optical network, may dynamically and flexibly allocate bandwidth resources, and can bear service requirements from a sub-wavelength level to a super-wavelength level, greatly enhance the utilization of the spectrum resources. From the view of the physical layer, the implementation of the bandwidth-variable optical network comprises two key technologies: rate-variable transceiver and bandwidth-variable optical switching. Wherein, the key of the former is to introduce the Orthogonal Frequency Division Multiplexing (OFDM) technology into the field of optical transmission, and the key of the latter is to use the new type of bandwidth-variable optical switching device for all optical switching of a node.

### (2) OFDM technology

OFDM is a multi-carrier modulation technology, which transmits high-speed data flow signals through multiple low-speed orthogonal sub-carriers. Differently from normal frequency division multiplexing technologies, for OFDM, due to orthogonality between subcarriers, there may be spectrum overlap between various subcarriers, and protection bandwidth is not needed. Therefore, the utilization of the spectrum is greatly improved. The OFDM technology greatly prompts the development of the optical transmission technology. Currently, the transmission rate of a single channel has achieved more than 1Tb/s. Except the advantage of high spectrum efficiency, the optical OFDM technology has features of strong capabilities of anti-chromatic dispersion (CD for short) and anti-polarization mode dispersion (PMD for short). The optical OFDM technology uses a multi-carrier multiplexing mechanism, and supports adaptive modulation format selection. Therefore, it can implement multi-data rate bearing, and support bandwidth allocation from a sub-wavelength to a super-wavelength. With the optical OFDM technology, the rate-variable transceiver can be realized, which primarily comprises manners of adjusting the number of electronic carriers, adjusting the number of photon wave bands, changing a modulation format or the like.

### (3) ROADM

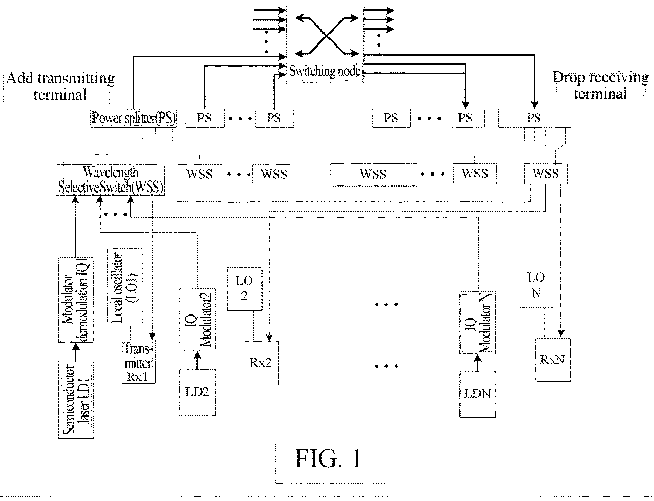

The Reconfigurable Optical Add/Drop Multiplexers (ROADM for short) is a key network element (or referred to as a node), which can dynamically manage switching wavelengths of output and input ends and Add/Drop service wavelengths through remote configuration, and has been widely applied into optical communication systems. The ROADM completes Add/Drop of an optical channel and cross-scheduling at a wavelength level between optical channels at a node. It implements configuration and adjustment of Add/Drop wavelengths by remotely controlling ROADM sub-systems in a network element through software, and allows the network to have capabilities of elastic multi-wavelength or full-wavelength add and drop in a condition that there is no manual configuration or expensive and energy-intensive OEO converter. Fig. 1 is a typical structural diagram of a conventional ROADM. As shown in Fig. 1, the most core functional modules of the ROADM comprise: a switching node and monitoring module and Add and Drop terminals (the connection constructions of the PS and the WSS in the Add/Drop transceiving terminal can be adjusted, which does not influence the essential use of the ROADM). The typical structure of the switching node and monitoring module is a splitter+WSS structure, which achieves a function of wavelength switching between output and input ports. The Add/Drop terminal is comprised of a wavelength cross-connection part and a client transceiver, which achieves selection and transmission of Add services of the node, add-in of a network node and drop and reception of Drop services from the network node.

Currently, there are primarily two ideas to achieve Add and Drop of the ROADM: broadcast/selection and de-multiplexing/cross/multiplexing, and there are three implementation technologies. The Add is a ROADM based on a wavelength blocker. The module has a wider pass band, and supports a greater number of channels and a narrower channel interval. However, there are a large number of elements, and the blocker has a high cost and limited functions. The Drop is a ROADM based on an integrated planar waveguide circuit, which has a high integrity, a compact structure, a good reliability, and a high speed. The disadvantages comprise high design difficulty, high price, small working range, large PMD, out of control of Wavelength Dependent Loss (WDL) and narrower bandwidth. Fig. 1 is a ROADM based on a splitter and a Wavelength Selective Switch (WSS), which is a third implementation manner of the ROADM. The advantages comprise easy integration, small insertion loss, rapid response speed, small channel crosstalk, and independence of wavelengths and polarization. As a classic implementation manner of the ROADM, it needs a large number of semiconductor lasers, IQ modulators, Power Splitters (PSs) and WSSs (the connection constructions of the PSs and the WSSs can be adjusted), has a high cost, and needs to uniformly control and schedule all WSSs of the Add and Drop parts when the Add and Drop are achieved. The large number of WSSs not only results in a problem of complexity of management and control, but also reduces the reliability of the system, thereby influencing its large-scale applications in the optical network.

### Summary of the Invention

In order to solve the above technical problem, the embodiments of the present invention disclose an optical comb based ROADM Add/Drop transceiving system, method and terminal, which can greatly simplify the ROADM Add/Drop transceiving system and achieve reduction of the system cost and simplification of the management and control manner.

In order to achieve the purpose of the present application, the embodiments of the present invention provide an optical comb based ROADM Add/Drop transceiving system, comprising a management and control platform, an Add transmitting terminal, a switching node and monitoring module and a Drop receiving terminal, wherein,
the management and control platform is configured to transmit Add management and control signaling to an Add carrier module and transmit Drop management and control signaling to a Drop local oscillator module;
the Add transmitting terminal comprises the Add carrier module, an Add selection module, an In-phase and Quadrature (IQ) modulation module and a channel combination module;
the Drop receiving terminal comprises a power splitter, a Drop local oscillator module, a Drop selection module and a coherent receiver, wherein
the Add carrier module comprises an Add laser and an Add carrier apparatus, wherein the Add carrier module is configured to configure the Add carrier apparatus according to received Add management and control signaling to enable the Add laser to produce desired Add carrier signals through the Add carrier apparatus;
the Add selection module is configured to select M channels of Add carrier signals according to the Add management and control signaling to output to M IQ modulation modules respectively;
the IQ modulation module is configured to perform signal modulation on received Add carrier signals and transmit the modulated Add carrier signals to the channel combination module;
the channel combination module is configured to perform carrier channel combination on the M channels of Add carrier signals on which IQ modulation has been performed and transmit the combined signal to the switching node and monitoring module;
the switching node and monitoring module is configured to transmit a received combined signal to the power splitter;
the power splitter is configured to receive the combined signal from the switching node and monitoring module, produce power split signals after performing power splitting, and transmit the power split signals to N channels of a coherent receiver;
the Drop local oscillator module comprises a Drop laser and a Drop local oscillator apparatus, wherein the Drop local oscillator module is configured to configure the Drop local oscillator apparatus according to received Drop management and control signaling to enable the Drop laser to produce desired local oscillator signals through the Drop local oscillator apparatus;
the Drop selection module is configured to select N channels of local oscillator signals according to the Drop management and control signaling to transmit to the coherent receiver;
the coherent receiver is configured to receive the power split signals output by the power splitter and various channels of local oscillator signals for demodulation,
wherein, M is a number of transmitting channels of signals of the Add transmitting terminal, N is a number of receiving channels of signals of the Drop receiving terminal, and M and N are integers greater than or equal to 1.

Preferably, the Add carrier apparatus and the Drop local oscillator apparatus are optical combs.

Preferably, the Add selection module is a 1×M Bandwidth-Variable Wavelength-Selective Switch (BV-WSS);
the channel combination module is an M×1 BV-WSS; and
the Drop selection module is a 1×N BV-WSS.

Preferably, the channel combination module is further configured to attenuate the M channels of Add carrier signals on which IQ modulation has been performed until power thereof is equal to preset maximum output power Pmax when power of the M channels of Add carrier signals on which IQ modulation has been performed is greater than Pmax.

The embodiments of the present invention further provide an optical comb based Reconfigurable Optical Add/Drop Multiplexers (ROADM) Add transmitting terminal, comprising an Add carrier module, an Add selection module, an IQ modulation module and a channel combination module, wherein,
the Add carrier module comprises an Add laser and an Add carrier apparatus, wherein the Add carrier module is configured to configure the Add carrier apparatus according to received Add management and control signaling to enable the Add laser to produce desired Add carrier signals through the Add carrier apparatus;
the Add selection module is configured to select M channels of Add carrier signals according to the Add management and control signaling to output to M IQ modulation modules respectively;
the IQ modulation module is configured to perform signal modulation on received Add carrier signals and transmit the modulated Add carrier signals to the channel combination module; and
the channel combination module is configured to perform carrier channel combination on the M channels of Add carrier signals on which IQ modulation has been performed and transmit the combined signal to the switching node and monitoring module,
wherein, M is a number of transmitting channels of signals of the Add transmitting terminal, and M is an integer greater than or equal to 1.

Preferably, the Add carrier apparatus is an optical comb.

Preferably, the Add selection module is a 1×M Bandwidth-Variable Wavelength-Selective Switch (BV-WSS).

Preferably, the channel combination module is further configured to attenuate the M channels of Add carrier signals on which IQ modulation has been performed until power the M channels of Add carrier signals is equal to preset maximum output power Pmax when power of the M channels of Add carrier signals on which IQ modulation has been performed is greater than Pmax.

The embodiments of the present invention further provide an optical comb based Reconfigurable Optical Add/Drop Multiplexers(ROADM) Drop receiving terminal, comprising a power splitter, a Drop local oscillator module, a Drop selection module and a coherent receiver, wherein
the power splitter is configured to receive a combined signal from a switching node and monitoring module, produce power split signals after performing power splitting, and transmit the power split signals to N channels of a coherent receiver;
the Drop local oscillator module comprises a Drop laser and a Drop local oscillator apparatus, wherein the Drop local oscillator module is configured to configure the Drop local oscillator apparatus according to received Drop management and control signaling to enable the Drop laser to produce desired local oscillator signals through the Drop local oscillator apparatus;
the Drop selection module is configured to select N channels of local oscillator signals according to the Drop management and control signaling to transmit to the coherent receiver; and
the coherent receiver is configured to receive power split signals output by the power splitter and various channels of local oscillator signals for demodulation,
wherein, N is a number of receiving channels of signals of the Drop receiving terminal, and N is an integer greater than or equal to 1.

Preferably, the Drop local oscillator apparatus is an optical comb.

Preferably, the Drop selection module is a 1×N Bandwidth-Variable Wavelength-Selective Switch (BV-WSS).

The embodiments of the present invention further provide an optical comb based Reconfigurable Optical Add/Drop Multiplexers(ROADM) Add/Drop transceiving method, comprising:
passing signals generated by an Add laser through an Add carrier apparatus to produce Add carrier signals desired by an Add transmitting terminal, and selecting M channels of the Add carrier signals according to Add management and control signaling;
performing IQ modulation on each of the M channels of Add carrier signals respectively, and after performing carrier channel combination on the Add carrier signals on which IQ modulation has been performed, transmitting the combined signal to a switching node and monitoring module;
after performing power splitting on a combined signal output by the switching node and monitoring module, producing power split signals and transmitting the power split signals to a coherent receiver;
passing signals generated by a Drop laser through a Drop local oscillator apparatus to produce local oscillator signals, selecting N channels of local oscillator signals according to Drop management and control signaling to transmit to the coherent receiver; and
after receiving the power split signals and the local oscillator signals, the coherent receiver performing demodulation,
wherein, M is a number of transmitting channels of signals of an Add transmitting terminal, N is a number of receiving channels of signals of a Drop transmitting terminal, and both M and N are integers greater than or equal to 1.

Preferably, the Add carrier apparatus and the Drop local oscillator apparatus are optical combs.

Preferably, selecting M channels of the Add carrier signals according to Add management and control signaling comprises: selecting the M channels of the Add carrier signals through a 1×M Bandwidth-Variable Wavelength-Selective Switch (BV-WSS) according to the Add management and control signaling;
performing carrier channel combination on the Add carrier signals on which IQ modulation has been performed comprises: performing carrier channel combination on the Add carrier signals on which IQ modulation has been performed through an M×1 BV-WSS; and
selecting N channels of local oscillator signals according to Drop management and control signaling comprises: selecting the N channels of local oscillator signals through a 1×N BV-WSS according to the Drop management and control signaling.

Preferably, the method further comprises: attenuating the M channels of Add carrier signals on which IQ modulation has been performed until power of the M channels of Add carrier signals is equal to preset maximum output power Pmax when power of the M channels of Add carrier signals on which IQ modulation has been performed is greater than Pmax.

The embodiments of the present invention further provide an optical comb based Reconfigurable Optical Add/Drop Multiplexers(ROADM) Add transmitting method, comprising:
passing signals generated by an Add laser through an Add carrier apparatus to produce Add carrier signals desired by an Add transmitting terminal, and selecting M channels of the Add carrier signals according to Add management and control signaling; and
performing IQ modulation on each of the M channels of Add carrier signals respectively, and after performing carrier channel combination on the Add carrier signals on which IQ modulation has been performed, transmitting the combined signal to a switching node and monitoring module,
wherein, M is a number of transmitting channels of signals of the Add transmitting terminal, and M is an integer greater than 1.

Preferably, the Add carrier apparatus is an optical comb.

Preferably, selecting M channels of the Add carrier signals according to Add management and control signaling comprises: selecting the M channels of the Add carrier signals through a 1×M Bandwidth Variable Wavelength Selective Switch (BV-WSS) according to the Add management and control signaling.

Preferably, the method further comprises: attenuating the M channels of Add carrier signals on which IQ modulation has been performed until power of the M channels of Add carrier signals is equal to preset maximum output power Pmax when power of the M channels of Add carrier signals on which IQ modulation has been performed is greater than Pmax.

The embodiments of the present invention further provide an optical comb based Reconfigurable Optical Add/Drop Multiplexers(ROADM) Drop receiving method, comprising:
after performing power splitting on a combined signal output by the switching node and monitoring module, producing power split signals and transmitting the power split signals to a coherent receiver;
passing signals generated by a Drop laser through a Drop local oscillator apparatus to produce local oscillator signals, selecting N channels of local oscillator signals according to Drop management and control signaling to transmit to the coherent receiver; and
after receiving the power split signals and the local oscillator signals, the coherent receiver performing demodulation,
wherein, N is a number of receiving channels of signals of a Drop receiving terminal, and N is an integer greater than 1.

Preferably, the Drop local oscillator apparatus is an optical comb.

Preferably, selecting N channels of local oscillator signals according to Drop management and control signaling comprises: selecting the N channels of local oscillator signals through a 1×N Bandwidth Variable Wavelength Selective Switch (BV-WSS) according to the Drop management and control signaling.

The embodiments of the present invention achieve simplification of structures of the Add transmitting terminal for carrier generation, adding and combination and the Drop receiving terminal for local oscillator generation, demodulation and receiving, which greatly simplifies the Add/Drop transceiving system and reduces complexity of the management and control circuit, thereby substantially saving the cost, space and energy consumption. Further, the Add and Drop capacity is increased or reduced by adjusting the BV-WSS and increasing or reducing the number of IQ modulation modules of the Add transmitting terminal and the number of channels of a coherent receiver of the Drop receiving terminal, which achieves flexible expansion of the system.

### Brief Description of Drawings

The accompanying drawings described herein are used to provide a further understanding of the present invention and constitute a part of this application, and the schematic embodiments of the present invention and the descriptions thereof are used to explain the present invention and do not constitute an improper limitation on the present invention. In the accompanying drawings:
Fig. 1 is a typical structural diagram of ROADM in the related technology;
Fig. 2 is a structural block diagram of an optical comb based ROADM Add/Drop transceiving system according to an embodiment of the present invention; and
Fig. 3 is a flowchart of an optical comb based ROADM Add/Drop transceiving method according to an embodiment of the present invention.

### Preferred Embodiments of the Invention

The optical comb is also referred to as an optical frequency comb, and refers to an optical device based on the mode-locked pulse laser technology or the cyclic frequency shift technology or the like here. When a narrow pulse seed laser is input, a group of up to hundreds of wavelengths with discrete frequencies, exactly equal wavelength intervals in the time domain and consistent phase and noise characteristics can be output. The spectrum distribution of this group of light is very like comb teeth, and an interval between each other is exactly equal to a repetition frequency of a laser. The frequency of the output light can be adjusted by controlling the input seed light. A combination of a laser and an optical comb can produce hundreds of carriers for optical communications, to substitute the same number of independent lasers, which saves resources and energy consumption.

For the WSS, the Liquid Crystal on Silicon (LCoS) technology based Bandwidth-Variable Wavelength-Selective Switch (BV-WSS for short) is widely used as a switching unit to achieve bandwidth-variable optical switching. It can flexibly adjust the switching granularity, a switching window can be flexibly adjusted from a fine granularity (a standard WDM grid less than 50GHz) to a coarse granularity, and a central frequency can be adjusted. Therefore, flexible and variable spectrum allocation can be achieved. Currently, the commercial BV-WSS can already support optical switching with 1GHz spectrum resolution and the minimum operation bandwidth below 10GHz. A structure of the typical bandwidth-variable optical switching node and monitoring module is shown in Fig. 1, and optical super channels with different bandwidths can be flexibly selected and switched at the node.

The embodiments of the present invention will be described in detail below in conjunction with accompanying drawings. It should be illustrated that the embodiments of the present application and features in the embodiments can be combined with each other randomly without conflicts.

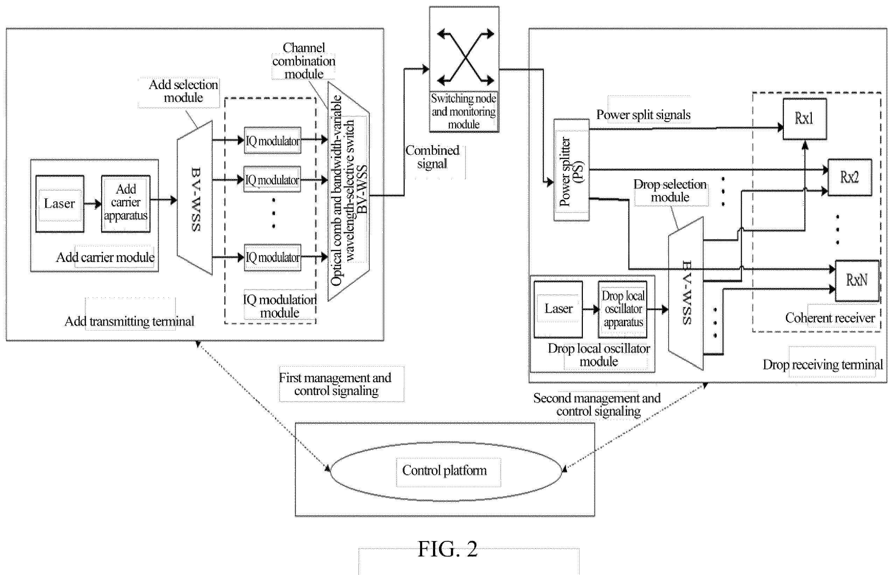

Fig. 2 is a structural block diagram of an optical comb based ROADM Add/Drop transceiving system according to an embodiment of the present invention, and as shown in Fig. 2, the system comprises a management and control platform, an Add transmitting terminal, a switching node and monitoring module and a Drop receiving terminal, wherein
the management and control platform is configured to transmit Add management and control signaling to an Add carrier module and transmit Drop management and control signaling to a Drop local oscillator module.

It should be illustrated that the Add management and control instruction and the Drop management and control instruction are instructions generated by an existing system receiving an optical network switching instruction and transmitting it to the management and control platform. In the existing art, the instructions are transmitted to each channel of laser of Add and Drop signals for processing, and in the embodiments of the present invention, it only needs to transmit the signaling to the Add carrier module and the Drop local oscillator module for setting.

The Add transmitting terminal comprises the Add carrier module, an Add selection module, an In-phase and Quadrature (IQ) modulation module and a channel combination module; wherein
the Add carrier module comprises an Add laser and an Add carrier apparatus, and is configured to configure the Add carrier apparatus according to the received Add management and control signaling to enable the Add laser to produce desired Add carrier signals through the Add carrier apparatus.

It should be illustrated that in the embodiments of the present invention, an Add laser and an Add carrier apparatus (optical comb) are used to substitute a large number of existing semiconductor lasers, which greatly simplifies the design of the system terminal and also substantially save the cost. Further, the IQ modulation is a modulation manner known in the industry, and is to split data into two channels and perform carrier modulation respectively, wherein the two channels of carriers are orthogonal to each other. Wherein, I represents in-phase, and Q represents quadrature.

The Add selection module is configured to select M channels of Add carrier signals according to the Add management and control signaling, and output the Add carrier signals to M IQ modulation modules respectively.

Preferably, the Add selection module is a 1×M Bandwidth-Variable Wavelength-Selective Switch (BV-WSS).

The IQ modulation module is configured to perform signal modulation on the M channels of Add carrier signals and transmit the modulated Add carrier signals to the channel combination module.

The channel combination module is configured to perform carrier channel combination on the M channels of Add carrier signals on which IQ modulation has been performed and transmit the combined signal to the switching node and monitoring module.

Preferably, the channel combination module is an M×1 BV-WSS.

It should be illustrated that the IQ modulation is an existing technical solution, and is described here for completely stating the working of the system. The channel combination module uses an M ×1 BV-WSS, which substitutes a large number of power splitters in the existing art, thereby simplifying the design of the system.

The switching node and monitoring module is configured to transmit the received combined signals to the power splitter.

The Drop receiving terminal comprises a power splitter, a Drop local oscillator module, a Drop selection module and a coherent receiver, wherein
the power splitter is configured to receive the combined signal from the switching node and monitoring module, produce power split signals after performing power splitting, and transmit the power split signals to N channels of a coherent receiver.

The Drop local oscillator module comprises a Drop laser and a Drop local oscillator apparatus, and is configured to configure the Drop local oscillator apparatus according to the received Drop management and control signaling to enable the Drop laser to produce desired local oscillator signals through the Drop local oscillator apparatus.

The Drop selection module selects N channels of local oscillator signals according to the Drop management and control signaling, and transmits the local oscillator signals to the coherent receiver.

Preferably, the Drop selection module is a 1×N BV-WSS.

The coherent receiver is configured to receive the power split signals output by the power splitter and various channels of local oscillator signals for demodulation.

M is the number of transmitting channels of signals of the Add transmitting terminal, N is the number of receiving channels of signals of the Drop receiving terminal, and both M and N are integers greater than or equal to 1.

In the system according to the embodiments of the present invention, the Add carrier apparatus and the Drop local oscillator apparatus are optical combs.

It should be illustrated that the Add selection module according to the embodiments of the present invention substitutes the WSS in the existing network with the BV-WSS, and by controlling the selected M channels, the channel combination module is an M×1 BV-WSS corresponding to the Add selection module 1×M BV-WSS, which achieves channel combination for the signals on which IQ modulation has been performed. As the price of the WSS is high, the embodiments of the present invention use the BV-WSS to implement improved design of the Add/Drop transceiving terminal, which greatly reduces the cost for development of the system. Similarly, the BV-WSS used by the Drop selection module is a 1×N BV-WSS which matches with N channels, and the design of the system is achieved by selecting a value of N corresponding to the system. The Add selection module 1×M BV-WSS and the N channels may be a 1×N BV-WSS, and M and N are integers in a range allowed by the BV-WSS.

Further, the system according to the embodiments of the present invention substitutes multiple WSSs with one BV-WSS since the existing ROADM Add/Drop transceiving system uses a large number of independent lasers, and consistency of carriers generated by these lasers is worse than consistency of carriers generated by an optical comb. Therefore, a more complicated management and control manner is needed. In the embodiments of the present invention, the optical comb based ROADM Add/Drop transceiving system uses one WSS, which simplifies the structure and also simplifies the management and control of the system for generation of carriers.

With the Add carrier module, the Add selection module, the channel combination module, the Drop local oscillator module and the Drop selection module described above, the simplification of the design of the Add/Drop transceiving terminal is achieved, and the cost is also reduced. With the simplification of the design, when the Add/Drop capacity is increased or reduced, there is no need to adjust and design the hardware of the semiconductor laser and the WSS, and it only needs to correspondingly add IQ modulators for corresponding signal processing in the Add transmitting system and an add coherent receiver in the Drop terminal. The difficulty of the management and control of the system is also greatly reduced, and the good improvement of the system and the method is achieved. The specific implementation process is as follows: the management and control platform acquires monitoring data from the switching node and monitoring module, produces corresponding Add management and control signaling and Drop management and control signaling according to the monitoring data, adjusts parameters of the Add carrier module, the Add selection module and the channel combination module and increases or reduces the number of channels of IQ modulators for the Add transmitting terminal according to the Add management and control signaling; and adjusts parameters of the Drop local oscillator module and the Drop selection module and increases or reduces the number of channels of the coherent receiver for the Add transmitting terminal according to the Drop management and control signaling. The principle of the Drop receiving terminal is similar to that of the Add transmitting terminal, and part of the principle will not be repeated.

When the number of channels of signals is increased in the Add transmitting terminal, according to the embodiments of the present invention, it only needs to adjust setting of parameters of the 1×M BV-WSS and increase or reduce the corresponding IQ modulators, and in the Drop receiving apparatus, it only needs to adjust setting of parameters of the 1×N BV-WSS and the number of coherent receivers (or select a coherent receiver in which the number of channels of signals can be adjusted, and directly adjust the number of channels of signals).

In the embodiments of the present invention, the channel combination module is further configured to attenuate the M channels of Add carrier signals on which IQ modulation has been performed until power thereof is equal to preset maximum output power Pmax when power of the M channels of Add carrier signals on which IQ modulation has been performed is greater than Pmax.

An optical comb based ROADM Add transmitting terminal comprises an Add carrier module, an IQ modulation module, a selection module and a channel combination module, wherein,
the Add carrier module comprises an Add laser and an Add carrier apparatus, and is configured to configure the Add carrier apparatus according to the received Add management and control signaling to enable the Add laser to produce desired Add carrier signals through the Add carrier apparatus.

Preferably, the Add carrier apparatus is an optical comb.

The Add selection module is configured to select M channels of Add carrier signals according to the Add management and control signaling, and output the Add carrier signals to M IQ modulation modules respectively.

Preferably, the Add selection module is a 1×M BV-WSS.

The IQ modulation module is configured to perform signal modulation on the M Add carrier signals respectively and transmit the modulated Add carrier signals to the channel combination module.

The channel combination module is configured to perform carrier channel combination on the M channels of Add carrier signals on which IQ modulation has been performed and transmit the combined signal to the switching node and monitoring module.

M is the number of transmitting channels of signals of the Add transmitting terminal.

The channel combination module is further configured to attenuate the M channels of Add carrier signals on which IQ modulation has been performed until power thereof is equal to preset maximum output power Pmax when power of the M channels of Add carrier signals on which IQ modulation has been performed is greater than Pmax.

An optical comb based ROADM Drop receiving terminal comprises a power splitter, a Drop local oscillator module, a Drop selection module and a coherent receiver, wherein
the power splitter is configured to receive a combined signal from a switching node and monitoring module, produce power split signals after performing power splitting, and transmit the power split signals to N channels of a coherent receiver.

The Drop local oscillator module comprises a Drop laser and a Drop local oscillator apparatus, and is configured to configure the Drop local oscillator apparatus according to received Drop management and control signaling to enable the Drop laser to produce desired local oscillator signals through the Drop local oscillator apparatus.

Preferably, the Drop local oscillator apparatus is an optical comb.

The Drop selection module selects N channels of local oscillator signals according to the Drop management and control signaling, and transmits the local oscillator signals to the coherent receiver.

Preferably, the Drop selection module is a 1×N BV-WSS.

The coherent receiver is configured to receive power split signals output by the power splitter and various channels of local oscillator signals for demodulation.

N is the number of receiving channels of signals of the Drop receiving terminal.

The Drop management and control instruction is an instruction which is directly set by the management and control platform or is obtained by the management and control platform according to monitoring information of the switching node and monitoring module.

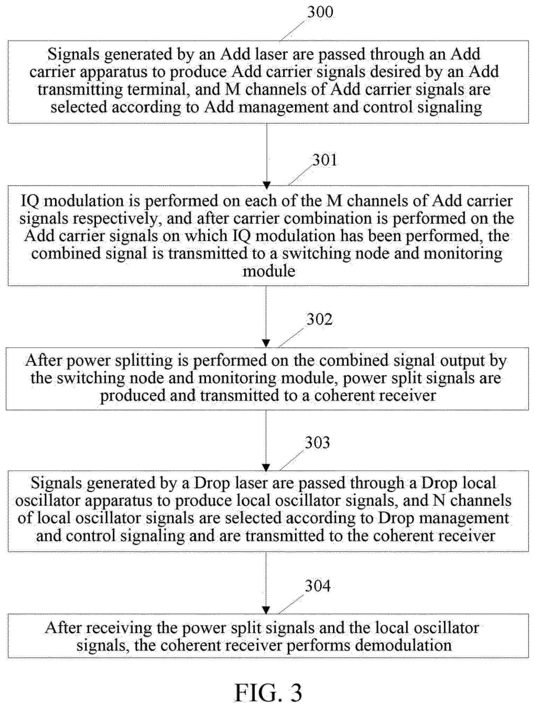

Fig. 3 is a flowchart of an optical comb based ROADM Add/Drop transceiving method according to an embodiment of the present invention. As shown in Fig. 3, the following steps are comprised.

In step 300, signals generated by an Add laser are passed through an Add carrier apparatus to produce Add carrier signals desired by an Add transmitting terminal, and M channels of Add carrier signals are selected according to Add management and control signaling.

In this step, selecting M channels of Add carrier signals according to Add management and control signaling comprises: selecting the M channels of Add carrier signals through a 1×M BV-WSS according to the Add management and control signaling.

In step 301, IQ modulation is performed on each of the M channels of Add carrier signals respectively, and after performing carrier combination on the Add carrier signals on which IQ modulation has been performed, the combined signal is transmitted to a switching node and monitoring module.

In this step, performing carrier channel combination on the Add carrier signals on which IQ modulation has been performed comprises: performing carrier channel combination on the Add carrier signals on which IQ modulation has been performed through an M×1 BV-WSS.

In step 302, after power splitting is performed on a combined signal output by the switching node and monitoring module, power split signals are produced and transmitted to a coherent receiver.

In step 303, signals generated by a Drop laser are passed through a Drop local oscillator apparatus to produce local oscillator signals, and N channels of local oscillator signals are selected according to Drop management and control signaling and are transmitted to the coherent receiver.

Selecting N channels of local oscillator signals according to Drop management and control signaling comprises: selecting the N channels of local oscillator signals through a 1×N BV-WSS according to the Drop management and control signaling of the management and control platform.

In step 304, after receiving the power split signals and the local oscillator signals, the coherent receiver performs demodulation.

In steps 300 and 303, the Add carrier apparatus and the Drop local oscillator apparatus are optical combs.

The M channels of Add carrier signals on which IQ modulation has been performed are attenuated until power thereof is equal to preset maximum output power Pmax when power of the M channels of Add carrier signals on which IQ modulation has been performed is greater than Pmax.

An optical comb based ROADM Add transmitting method comprises:
signals generated by an Add laser are passed through an Add carrier apparatus to produce Add carrier signals desired by an Add transmitting terminal, and M channels of Add carrier signals are selected according to Add management and control signaling.
Wherein, the Add carrier apparatus is an optical comb.

Preferably, selecting M channels of Add carrier signals according to Add management and control signaling comprises: selecting the M channels of Add carrier signals through a 1×M BV-WSS according to the Add management and control signaling.

IQ modulation is performed on each of the M channels of Add carrier signals respectively, and after carrier channel combination is performed on the Add carrier signals on which IQ modulation has been performed, the combined signal is transmitted to a switching node and monitoring module.

M is the number of transmitting channels of signals of the Add transmitting terminal.

The M channels of Add carrier signals on which IQ modulation has been performed are attenuated until power thereof is equal to preset maximum output power Pmax when power of the M channels of Add carrier signals on which IQ modulation has been performed is greater than Pmax.

An optical comb based ROADM Drop receiving method comprises:
after power splitting is performed on a combined signal output by the switching node and monitoring module, power split signals are produced and transmitted to a coherent receiver; and
signals generated by a Drop laser are passed through a Drop local oscillator apparatus to produce local oscillator signals, N channels of local oscillator signals are selected according to Drop management and control signaling, and transmitted to the coherent receiver.

Preferably, selecting N channels of local oscillator signals according to Drop management and control signaling comprises: the N channels of local oscillator signals are selected through a 1×N BV-WSS according to the Drop management and control signaling of the management and control platform.

The Drop local oscillator apparatus is an optical comb.

After receiving the power split signals and the local oscillator signals, the coherent receiver performs demodulation.

N is the number of receiving channels of signals of a Drop receiving terminal.

Although the implementations disclosed in the present application are described as above, the described content is merely implementations used to facilitate understanding of the present application, instead of limiting the present application. Without departing from the rule and scope disclosed in the present application, any skilled person in the art can make any change and variation in the form and details of the implementations, but the patent protection scope of the present application should still be defined by the scope of the appended claims.

### Industrial applicability

The embodiments of the present invention achieve simplification of structures for Add carrier generation, adding and combination and Drop local oscillator generation, demodulation and receiving, which reduces complexity of the management and control circuit, thereby saving the cost.

## Claims

1. An optical comb based Reconfigurable Optical Add/Drop Multiplexers (ROADM) Add/Drop transceiving system, comprising a management and control platform, an Add transmitting terminal, a switching node and monitoring module and a Drop receiving terminal, wherein,
the management and control platform is configured to transmit Add management and control signaling to an Add carrier module and transmit Drop management and control signaling to a Drop local oscillator module;
the Add transmitting terminal comprises the Add carrier module, an Add selection module, an In-phase and Quadrature (IQ) modulation module and a channel combination module;
the Drop receiving terminal comprises a power splitter, a Drop local oscillator module, a Drop selection module and a coherent receiver, wherein
the Add carrier module comprises an Add laser and an Add carrier apparatus, wherein the Add carrier module is configured to configure the Add carrier apparatus according to received Add management and control signaling to enable the Add laser to produce desired Add carrier signals through the Add carrier apparatus;
the Add selection module is configured to select M channels of Add carrier signals according to the Add management and control signaling to output to M IQ modulation modules respectively;
the IQ modulation module is configured to perform signal modulation on received Add carrier signals and transmit the modulated Add carrier signals to the channel combination module;
the channel combination module is configured to perform carrier channel combination on the M channels of Add carrier signals on which IQ modulation has been performed and transmit the combined signal to the switching node and monitoring module;
the switching node and monitoring module is configured to transmit a received combined signal to the power splitter;
the power splitter is configured to receive the combined signal from the switching node and monitoring module, produce power split signals after performing power splitting, and transmit the power split signals to N channels of a coherent receiver;
the Drop local oscillator module comprises a Drop laser and a Drop local oscillator apparatus, wherein the Drop local oscillator module is configured to configure the Drop local oscillator apparatus according to received Drop management and control signaling to enable the Drop laser to produce desired local oscillator signals through the Drop local oscillator apparatus;
the Drop selection module is configured to select N channels of local oscillator signals according to the Drop management and control signaling to transmit to the coherent receiver;
the coherent receiver is configured to receive the power split signals output by the power splitter and various channels of local oscillator signals for demodulation,
wherein, M is a number of transmitting channels of signals of the Add transmitting terminal, N is a number of receiving channels of signals of the Drop receiving terminal, and M and N are integers greater than or equal to 1.

2. The system according to claim 1, wherein the Add carrier apparatus and the Drop local oscillator apparatus are optical combs.

3. The system according to claim 1, wherein the Add selection module is a 1×M Bandwidth-Variable Wavelength-Selective Switch BV-WSS;
the channel combination module is an M×1 BV-WSS; and
the Drop selection module is a 1×N BV-WSS.

4. The system according to any of claims 1-3, wherein the channel combination module is further configured to attenuate the M channels of Add carrier signals on which IQ modulation has been performed until power of the M channels of Add carrier signals is equal to preset maximum output power Pmax when power of the M channels of Add carrier signals on which IQ modulation has been performed is greater than Pmax.

5. An optical comb based Reconfigurable Optical Add/Drop Multiplexers (ROADM) Add transmitting terminal, comprising an Add carrier module, an Add selection module, an IQ modulation module and a channel combination module, wherein,
the Add carrier module comprises an Add laser and an Add carrier apparatus, wherein the Add carrier module is configured to configure the Add carrier apparatus according to received Add management and control signaling to enable the Add laser to produce desired Add carrier signals through the Add carrier apparatus;
the Add selection module is configured to select M channels of Add carrier signals according to the Add management and control signaling to output to M IQ modulation modules respectively;
the IQ modulation module is configured to perform signal modulation on received Add carrier signals and transmit the modulated Add carrier signals to the channel combination module; and
the channel combination module is configured to perform carrier channel combination on the M channels of Add carrier signals on which IQ modulation has been performed and transmit the combined signal to the switching node and monitoring module,
wherein, M is a number of transmitting channels of signals of the Add transmitting terminal, and M is an integer greater than or equal to 1.

6. The terminal according to claim 5, wherein the Add carrier apparatus is an optical comb.

7. The terminal according to claim 5, wherein the Add selection module is a 1×M Bandwidth-Variable Wavelength-Selective Switch BV-WSS.

8. The terminal according to any of claims 5-7, wherein the channel combination module is further configured to attenuate the M channels of Add carrier signals on which IQ modulation has been performed until power of the M channels of Add carrier signals is equal to preset maximum output power Pmax when power of the M channels of Add carrier signals on which IQ modulation has been performed is greater than Pmax.

9. An optical comb based Reconfigurable Optical Add/Drop Multiplexers (ROADM) Drop receiving terminal, comprising a power splitter, a Drop local oscillator module, a Drop selection module and a coherent receiver, wherein,
the power splitter is configured to receive a combined signal from a switching node and monitoring module, produce power split signals after performing power splitting, and transmit the power split signals to N channels of a coherent receiver;
the Drop local oscillator module comprises a Drop laser and a Drop local oscillator apparatus, wherein the Drop local oscillator module is configured to configure the Drop local oscillator apparatus according to received Drop management and control signaling to enable the Drop laser to produce desired local oscillator signals through the Drop local oscillator apparatus;
the Drop selection module is configured to select N channels of local oscillator signals according to the Drop management and control signaling to transmit to the coherent receiver; and
the coherent receiver is configured to receive power split signals output by the power splitter and various channels of local oscillator signals for demodulation,
wherein, N is a number of receiving channels of signals of the Drop receiving terminal, and N is an integer greater than or equal to 1.

10. The terminal according to claim 9, wherein the Drop local oscillator apparatus is an optical comb.

11. The terminal according to claim 9, wherein the Drop selection module is a 1×N Bandwidth-Variable Wavelength-Selective Switch BV-WSS.

12. An optical comb based Reconfigurable Optical Add/Drop Multiplexers (ROADM) Add/Drop transceiving method, comprising:
passing signals generated by an Add laser through an Add carrier apparatus to produce Add carrier signals desired by an Add transmitting terminal, and selecting M channels of the Add carrier signals according to Add management and control signaling;
performing IQ modulation on each of the M channels of Add carrier signals respectively, and after performing carrier channel combination on the Add carrier signals on which IQ modulation has been performed, transmitting the combined signal to a switching node and monitoring module;
after performing power splitting on a combined signal output by the switching node and monitoring module, producing power split signals and transmitting the power split signals to a coherent receiver;
passing signals generated by a Drop laser through a Drop local oscillator apparatus to produce local oscillator signals, selecting N channels of local oscillator signals according to Drop management and control signaling to transmit to the coherent receiver; and
after receiving the power split signals and the local oscillator signals, the coherent receiver performing demodulation,
wherein, M is a number of transmitting channels of signals of an Add transmitting terminal, N is a number of receiving channels of signals of a Drop receiving terminal, and both M and N are integers greater than or equal to 1.

13. The method according to claim 12, wherein the Add carrier apparatus and the Drop local oscillator apparatus are optical combs.

14. The method according to claim 12, wherein,
selecting M channels of the Add carrier signals according to Add management and control signaling comprises: selecting the M channels of the Add carrier signals through a 1×M Bandwidth-Variable Wavelength-Selective Switch BV-WSS according to the Add management and control signaling;
performing carrier channel combination on the Add carrier signals on which IQ modulation has been performed comprises: performing carrier channel combination on the Add carrier signals on which IQ modulation has been performed through an M×1 BV-WSS; and
selecting N channels of local oscillator signals according to Drop management and control signaling comprises: selecting the N channels of local oscillator signals through a 1×N BV-WSS according to the Drop management and control signaling.

15. The method according to claims 12-14, further comprising: attenuating the M channels of Add carrier signals on which IQ modulation has been performed until power of the M channels of Add carrier signals is equal to preset maximum output power Pmax when power of the M channels of Add carrier signals on which IQ modulation has been performed is greater than Pmax.

16. An optical comb based Reconfigurable Optical Add/Drop Multiplexers (ROADM) Add transmitting method, comprising:
passing signals generated by an Add laser through an Add carrier apparatus to produce Add carrier signals desired by an Add transmitting terminal, and selecting M channels of the Add carrier signals according to Add management and control signaling; and
performing IQ modulation on each of the M channels of Add carrier signals respectively, and after performing carrier channel combination on the Add carrier signals on which IQ modulation has been performed, transmitting the combined signal to a switching node and monitoring module,
wherein, M is a number of transmitting channels of signals of the Add transmitting terminal, and M is an integer greater than 1.

17. The method according to claim 16, wherein the Add carrier apparatus is an optical comb.

18. The method according to claim 16, wherein selecting M channels of the Add carrier signals according to Add management and control signaling comprises: selecting the M channels of the Add carrier signals through a 1×M Bandwidth Variable Wavelength Selective Switch BV-WSS according to the Add management and control signaling.

19. The method according to claims 16-18, further comprising: attenuating the M channels of Add carrier signals on which IQ modulation has been performed until power of the M channels of Add carrier signals is equal to preset maximum output power Pmax when power of the M channels of Add carrier signals on which IQ modulation has been performed is greater than Pmax.

20. An optical comb based Reconfigurable Optical Add/Drop Multiplexers (ROADM) Drop receiving method, comprising:
after performing power splitting on a combined signal output by the switching node and monitoring module, producing power split signals and transmitting the power split signals to a coherent receiver;
passing signals generated by a Drop laser through a Drop local oscillator apparatus to produce local oscillator signals, selecting N channels of local oscillator signals according to Drop management and control signaling to transmit to the coherent receiver; and
after receiving the power split signals and the local oscillator signals, the coherent receiver performing demodulation,
wherein, N is a number of receiving channels of signals of a Drop receiving terminal, and N is an integer greater than 1.

21. The method according to claim 20, wherein the Drop local oscillator apparatus is an optical comb.

22. The method according to claim 20, wherein selecting N channels of local oscillator signals according to Drop management and control signaling comprises: selecting the N channels of local oscillator signals through a 1×N Bandwidth Variable Wavelength Selective Switch BV-WSS according to the Drop management and control signaling.
